# EUROPEAN PATENT APPLICATION

(11) **EP 2 770 464 A1**
(43) Date of publication of application: **27.08.2014**
(21) Application number: 14156414.6
(22) Date of filing: 24.02.2014
(51) Int. Cl.: G06Q 10/06, G06Q 30/00

(54) **Need determination device, need determination method, and need determination program**

(30) Priority: 26.02.2013 JP 2013035794
(71) Applicant: Mitsubishi Heavy Industries, Ltd., Tokyo 108-8215 (JP)
(72) Inventor: Saito, Mayumi, Tokyo, 108-8215 (JP); Sonoda, Takashi, Tokyo, 108-8215 (JP); Wang, Rong, Tokyo, 108-8215 (JP); Ito, Hirohiko, Tokyo, 108-8215 (JP); Imakita, Koji, Tokyo, 108-8215 (JP)
(74) Representative: Henkel, Breuer & Partner

(57) **Abstract**

In an aspect of the present invention, a need determination device (10) includes a storage unit (16) configured to store survey data (163) in which an assessment value of a quantitatively or qualitatively assessable survey item is set at each textbook that is the same type as an object of which needs are to be determined, and need assessment data (164) in which an assessment value of a need is set at each of the textbooks; a determination logic generation unit (161a) configured to generate a determination logic for determining a need based on the survey data (163) and the need assessment data (164); and a determination unit (161b) configured to determine a need of the object by applying, to the determination logic, input data in which the assessment value of the survey item of the object of which needs are to be determined is set.

## Description

### TECHNICAL FIELD

The present invention relates to a need determination device, a need determination method, and a need determination program.

### BACKGROUND ART

In order to make a proposal with a high customer satisfaction to a customer, it is important to grasp the needs of the customer or the like. Patent Literature 1 (Japanese Patent Application Laid-open No. 2005-038042) discloses a construction project order receipt support system that consolidates the information about the construction project separately managed by a plant manager and a plant equipment manufacturer and includes a unit configured to quantitatively grasp and predict the needs of the plant manager.

Only sharing the information with the customer as described above is sometimes not enough to make a proposal with a high customer satisfaction because the needs of the customer are grasped only with a narrow view.

### DISCLOSURE OF INVENTION

An objective of the present invention is to provide a need determination device, need determination method, and need determination program capable of making a proposal with a high customer satisfaction.

According to an aspect of the present invention, there is provided a need determination device including: a storage unit configured to store survey data in which an assessment value of a quantitatively or qualitatively assessable survey item is set at each textbook that is the same type as an object of which needs are to be determined, and need assessment data in which an assessment value of a need is set at each textbook; a determination logic generation unit configured to generate a determination logic for determining a need based on the survey data and the need assessment data; and a determination unit configured to determine a need of the object by applying, to the determination logic, input data in which the assessment value of the survey item of the object of which needs are to be determined is set.

According to an aspect of the present invention, there is provided a need determination method performed with a need determination device, the need determination method including: obtaining survey data in which an assessment value of a quantitatively or qualitatively assessable survey item is set at each textbook that is the same type as an object of which needs are to be determined, and need assessment data in which an assessment value of a need is set at each of the textbooks; generating a determination logic for determining a need based on the survey data and the need assessment data; and determining a need of the object by applying, to the determination logic, input data in which the assessment value of the survey item of the object of which needs are to be determined is set.

According to an aspect of the present invention, there is provided a need determination program causing a need determination device to perform: obtaining survey data in which an assessment value of a quantitatively or qualitatively assessable survey item is set at each textbook that is the same type as an object of which needs are to be determined, and need assessment data in which an assessment value of a need is set at each of the textbooks; generating a determination logic for determining a need based on the survey data and the need assessment data; and determining a need of the object by applying, to the determination logic, input data in which the assessment value of the survey item of the object of which needs are to be determined is set.

### BRIEF DESCRIPTION OF DRAWINGS

FIG. 1 is a block diagram of the configuration of a need determination device according to an embodiment;
FIG. 2 is a diagram of exemplary plant data;
FIG. 3 is a diagram of exemplary survey data;
FIG. 4 is a diagram of exemplary survey items included in the survey data;
FIG. 5 is a diagram of exemplary need assessment data;
FIG. 6 is a diagram of exemplary needs included in the need assessment data;
FIG. 7 is a diagram of an exemplary correlation between a survey item and the need;
FIG. 8 is a diagram of an exemplary correlation between the survey item and the need;
FIG. 9 is a diagram of exemplary correlation data.
FIG. 10 is a diagram of exemplary logical data;
FIG. 11 is a diagram of exemplary input data in a determination process;
FIG. 12 is a diagram of exemplary output data in the determination process;
FIG. 13 is a diagram of exemplary production of the grounds for the determination of a need; and
FIG. 14 is a flowchart of a process in the need determination device.

### BEST MODE(S) FOR CARRYING OUT THE INVENTION

Hereinafter, an embodiment of the need determination device, need determination method, and need determination program according to the present invention will be described based on the appended drawings. Note that the present invention is not limited to the embodiment. The components in the embodiment include the materials that persons skilled in the art can easily assume, or that are substantially the same as the components, or namely, the equivalents.

The need determination device, need determination method, and need determination program according to the embodiments of the present invention gives the effect to enable a proposal with a high customer satisfaction.

### Examples

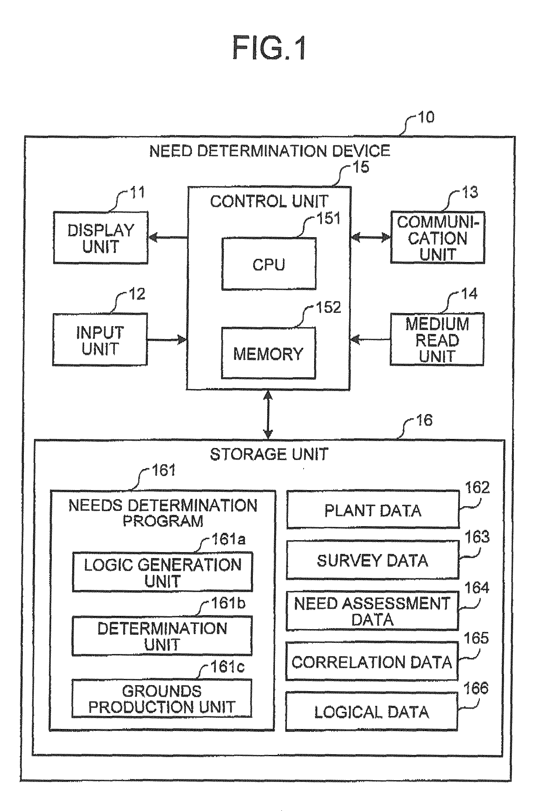

The configuration of the need determination device according to the present embodiment will be described with reference to FIG. 1. FIG. 1 is a block diagram of the configuration of a need determination device 10 according to the present embodiment. Hereinafter, an example in which the need determination device 10 is used to determine the needs of a thermal electricity generating plant in order to propose a renewal construction of the thermal electricity generating plant.

As illustrated in FIG. 1, the need determination device 10 includes a display unit 11, an input unit 12, a communication unit 13, a medium read unit 14, a control unit 15, and a storage unit 16.

The display unit 11 includes a display device such as a liquid crystal panel or an organic electro-luminescence (EL) panel to display various types of information including words or graphics based on a control signal transmitted from the control unit 15. The input unit 12 includes an input device such as a keyboard to output, to the control unit 15, the signal corresponding to the operation to the input device by the user. The communication unit 13 controls the transmission and reception of the information with another device based on a predetermined communication protocol. The medium read unit 14 reads a program or data from a portable non-transitory storage medium such as an optical disk, a magneto optical disk, or a memory card.

The control unit 15 includes a central processing unit (CPU) 151 working as an arithmetic device and a memory 152 working as a storage device to implement various functions by executing programs using the hardware resources.
Specifically, the control unit 15 reads a program stored in the storage unit 16 and develops the program to the memory 152 in order to cause the CPU 151 to execute an instruction included in the program developed to the memory 152. Then, the control unit 15 reads and writes the data from/to the memory 152 and the storage unit 16, or controls the operation of the communication unit 13 or the like according to the result from the execution of the instruction with the CPU 151.

The storage unit 16 includes a non-volatile storage unit such as a magnetic storage device or a semiconductor storage device to store various types of programs and data. The programs stored in the storage unit 16 include a need determination program 161. The data stored in the storage unit 16 includes plant data 162, survey data 163, need assessment data 164, correlation data 165, and logical data 166.

Note that all or a part of the programs and data stored in the storage unit 16 in FIG. 1 can also be stored in a non-transitory storage medium that the medium read unit 14 can read. All or a part of the programs and data stored in the storage unit 16 in FIG. 1 can also be obtained from another device through the communication with the communication unit 13.

The need determination program 161 provides a function to generate a determination logic for determining a need, a function to determine the need based on the determination logic, and a function to provide the grounds for the determination of the need. The need determination program 161 includes a logic generation unit 161a, a determination unit 161b, and a grounds production unit 161c.

The logic generation unit 161a generates a determination logic for determining a need. Specifically, the logic generation unit 161a generates a determination logic using the information stored in the survey data 163 as an explanatory variable and the information stored in the need assessment data 164 as a response variable, respectively, and based on a statistical method, for example, a categorical data analysis. The categorical data analysis includes, for example, a qualification type II and a decision tree.

The determination unit 161b determines a need based on the determination logic generated with the logic generation unit 161a. The grounds production unit 161c produces the grounds for the determination of the need with the determination unit 161b to the user.

The plant data 162 holds the information about the thermal electricity generating plant. The plant data 162 is used for specifying a location in which the thermal electricity generating plant exists.

The survey data 163 includes the assessment value of a quantitatively or qualitatively assessable survey item set for each textbook (specimen, or sample). The textbook (specimen, or sample) is, for example, the same type of a plant, a facility, equipment, a device, a company, a person or the like as the object of which needs are to be determined. The object of which needs are to be determined is the thermal electricity generating plant in the present embodiment. The assessment value of the survey item is determined based on an inquiry, a published reference, and the like. The survey item is classified into a category of one or a plurality of categories.

The need assessment data 164 includes an assessment value of a need set for each textbook that is the same type as the object of which needs are to be determined. The assessment value of the need of the textbook is determined by a person in charge with experiences or expertise. The need is classified into a category of one or a plurality of categories.

The correlation data 165 holds the information about the correlation between the survey item included in the survey data 163 and the need included in the need assessment data 164. The logical data 166 holds the determination logic generated with the logic generation unit 161a.

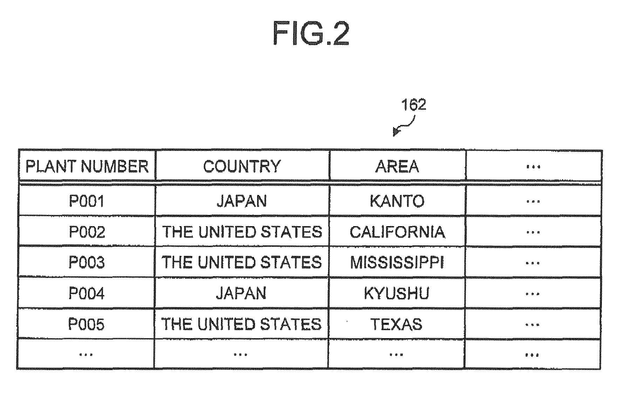

The plant data 162 will be described in more detail with reference to FIG. 2. FIG. 2 is a diagram of an example of the plant data 162. The plant data 162 holds the information about each thermal electricity generating plant. As illustrated in the example in FIG. 2, the plant data 162 includes items including a plant number, a country, and an area. Plant numbers identifying thermal electricity generating plants are set to the plant number item. The values identifying the countries and areas in which the thermal electricity generating plants exist are set to the country item and the area item.

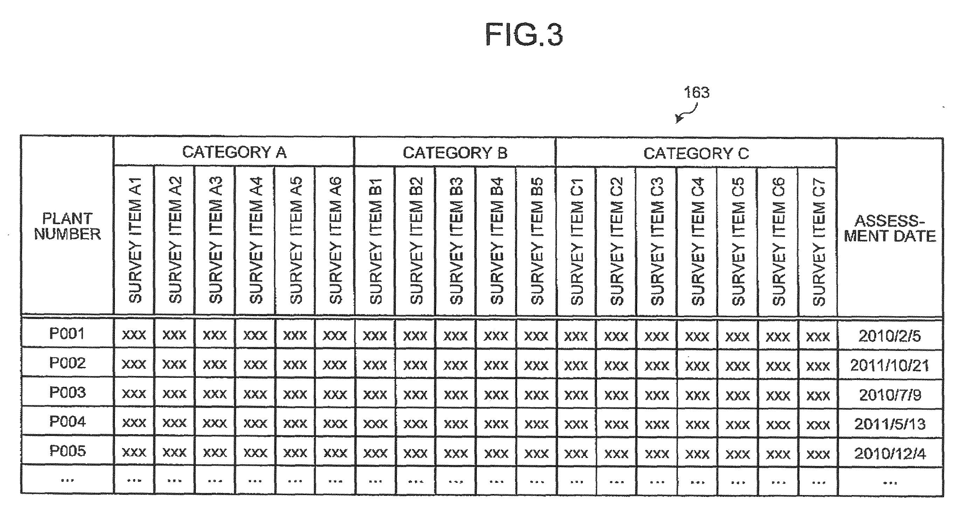

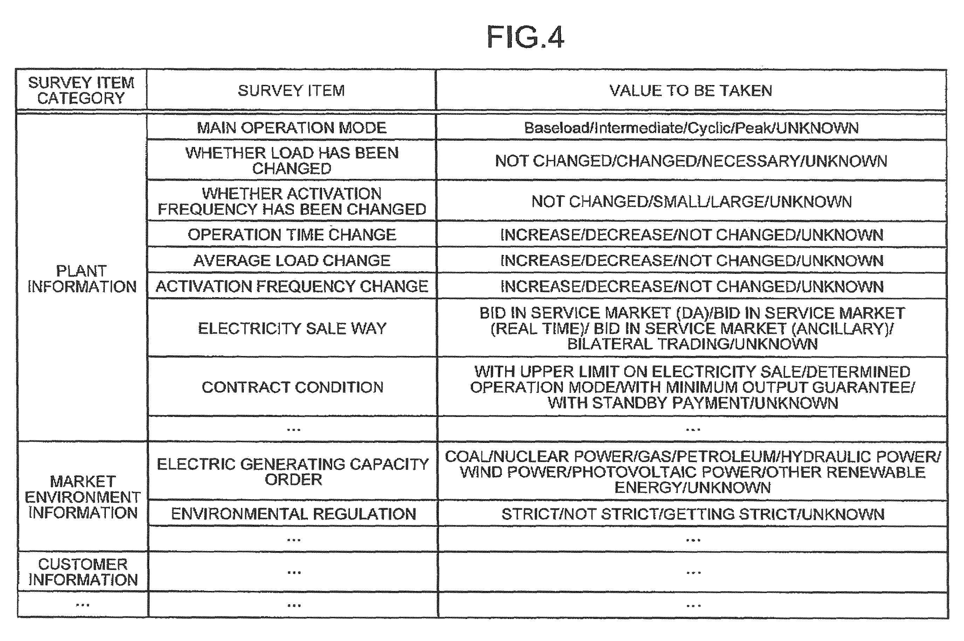

The survey data 163 will be described in more detail with reference to FIGS. 3 and 4. FIG. 3 is a diagram of an example of the survey data 163. FIG. 4 is a diagram of exemplary survey items included in the survey data 163.

The survey data 163 stores a value working as an explanatory value for generating a determination logic of a need. Specifically, the survey data 163 stores the value obtained by quantitatively or qualitatively assessing each survey item of the textbook. In addition to the item of the textbook, the survey items include more general items such as the item of the organization to which the textbook belongs, the item of the environment in which the textbook is included, and the item of the system of the society to which the textbook belongs. The survey items are categorized such that the same types of items are categorized into the same category.

As illustrated in the example in FIG. 3, the survey data 163 includes survey items A1 to A6 categorized into a category A, survey items B1 to B5 categorized into a category B, survey items C1 to C7 categorized into a category C. The object of which needs are to be determined is a thermal electricity generating plant in the present embodiment. Thus, the quantitative or qualitative assessment value of each survey item is stored at each plant number for identifying the thermal electricity generating plant in the survey data 163. Each of the plant numbers is linked to the date on which the assessment values have been assessed.

The form of the survey data 163 is not limited to the example illustrated in the example in FIG. 3. For example, the number of categories included in the survey data 163 and the number of survey items included in each of the categories are not limited to the example illustrated in FIG. 3.

When the object of which needs are to be determined is a thermal electricity generating plant, for example, "plant information", "market environment information", and "customer information" are set as the categories of the survey items as illustrated in FIG. 4. The "plant information" is a category including the survey items of the thermal electricity generating plant itself. The "market environment information" is a category including the survey items of the system of the society to which the thermal electricity generating plant belongs. The "customer information" is a category including the survey items of the manager of the thermal electricity generating plant.

As described above, setting not only the survey items of the textbook itself but also more general survey items can generate a determination logic capable of determining the need from a wider view.

The category of the "plant information" includes survey items such as the "main operation mode", the "whether the load has been changed", the "whether the activation frequency has been changed", the "operation time change", the "average load change", the "activation frequency change", the "electricity sale way", and the "contract condition".

The "main operation mode" is an item of the main operation mode of the thermal electricity generating plant. The "whether the load has been changed" is an item of the occurrence of change of the load. The "whether the activation frequency has been changed" is an item of the occurrence of change of the frequency of activation. The "operation time change" is an item of the trends of change of the operation time. The "average load change" is an item of the trends of change of the average of the load. The "activation frequency change" is an item of the trends of change of the frequency of activation". The "electricity sale way" is an item of the way to sell the electricity to an electric transmission company. The "contract condition" is an item of the contract for selling the electricity to an electric transmission company.

The category of the "market environment information" includes survey items, for example, the "electric generating capacity order", and the "environmental regulation". The "electric generating capacity order" is an item of the order of energy source of the country or area in which the thermal electricity generating plant exists in view of the electric generating capacity. The "environmental regulation" is an item of the rigidity of environmental regulation in the country or area in which the thermal electricity generating plant exists.

Values to be taken are predetermined for each of the survey items. For example, the item of the "main operation mode" takes one of the values "Baseload", "Intermediate", "Cyclic", "Peak", and "Unknown". For example, the item of the "electric generating capacity order" takes one of the values "coal", "nuclear power", "gas", "petroleum", "hydraulic power", "wind power", "photovoltaic power", "another renewable energy", and "unknown" in the order according to the electric generating capacity.

The survey items are set such that a person who does not have special experiences or expertise can similarly assess the survey items based on the inquires and the disclosed information. Thus, the need determination device 10 can prepare homogeneous information as the explanatory variable for generating the determination logic for the need.

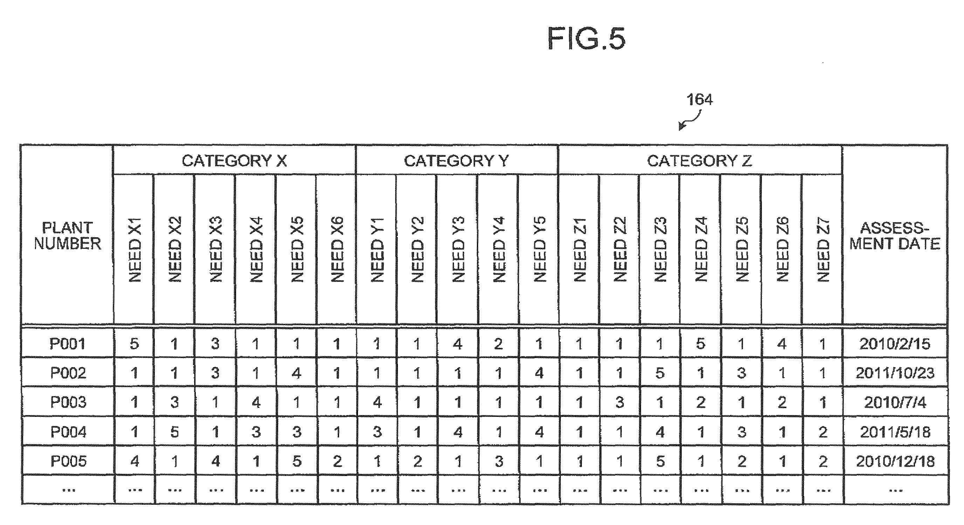

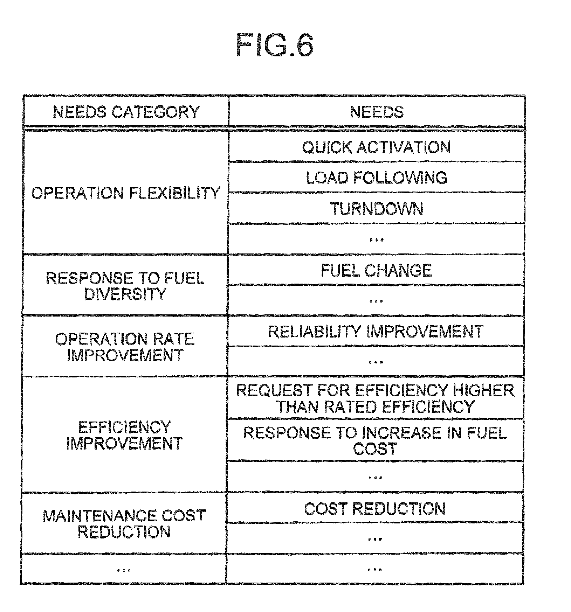

The need assessment data 164 will be described in more detail with reference to FIGS. 5 and 6. FIG. 5 is a diagram of an example of the need assessment data 164. FIG. 6 is a diagram of exemplary needs included in the need assessment data 164.

The value to work as the response variable for generating the determination logic for the need is stored in the need assessment data 164. Specifically, the values obtained by assessing the needs of the textbook are stored in the need assessment data 164. The needs are categorized such that the same types of needs are categorized into the same category.

In the example illustrated in FIG. 5, the need assessment data 164 includes needs X1 to X6 included in a category X, needs Y1 to Y5 included in a category Y, needs Z1 to Z7 included in a category Z. The object of which needs are to be determined is a thermal electricity generating plant in the present embodiment. Thus, the assessment values of the needs are stored at each of the plant numbers identifying the thermal electricity generating plants in the need assessment data 164. Each of the plant numbers is also linked to the date on which the assessment values have been assessed.

The form of the need assessment data 164 is not limited to the example illustrated in FIG. 5. For example, the number of the categories included in the need assessment data 164 and the number of needs included in the categories are not limited to the example illustrated in FIG. 5.

When the object of which needs are to be determined is a thermal electricity generating plant, for example, the "operation flexibility", the "response to fuel diversity", the "operation rate improvement", the "efficiency improvement", and the "maintenance cost reduction" are set as the categories of the needs as illustrated in FIG. 6.

The "operation flexibility" is a category including the needs about the improvement of flexibility of the operation of the thermal electricity generating plant. The "response to fuel diversity" is a category including the needs about the diversity of the fuels used at the thermal electricity generating plant. The "operation rate improvement" is a category including the needs about the improvement of the operation rate of the thermal electricity generating plant. The "efficiency improvement" is a category including the needs about the improvement of the efficiency in the thermal electricity generating plant. The "maintenance cost reduction" is a category including the needs about the reduction in the cost for the operation of the thermal electricity generating plant.

The category of the "operation flexibility" includes the needs, for example, the "quick activation", the "load following", and the "turndown". The category of the "response to fuel diversity" includes the needs, for example, the "fuel change". The category of the "operation rate improvement" includes the needs, for example, the "reliability improvement". The category of the "efficiency improvement" includes the needs, for example, the "request for efficiency higher than the rated efficiency", and the "response to the increase in the fuel cost". The category of the "maintenance cost reduction" includes the needs, for example, the "cost reduction".

Each of the needs is assessed, for example, with five levels from one to five. It is indicated in the present embodiment that the higher the value of the need is, the higher the need is. The needs are assessed by a person in charge with experiences or expertise.

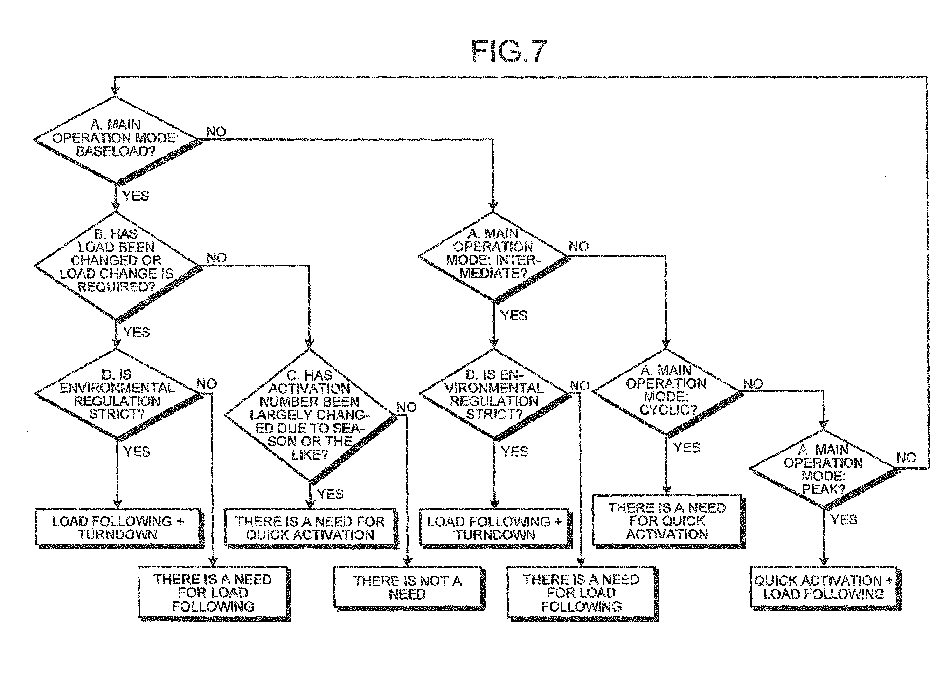

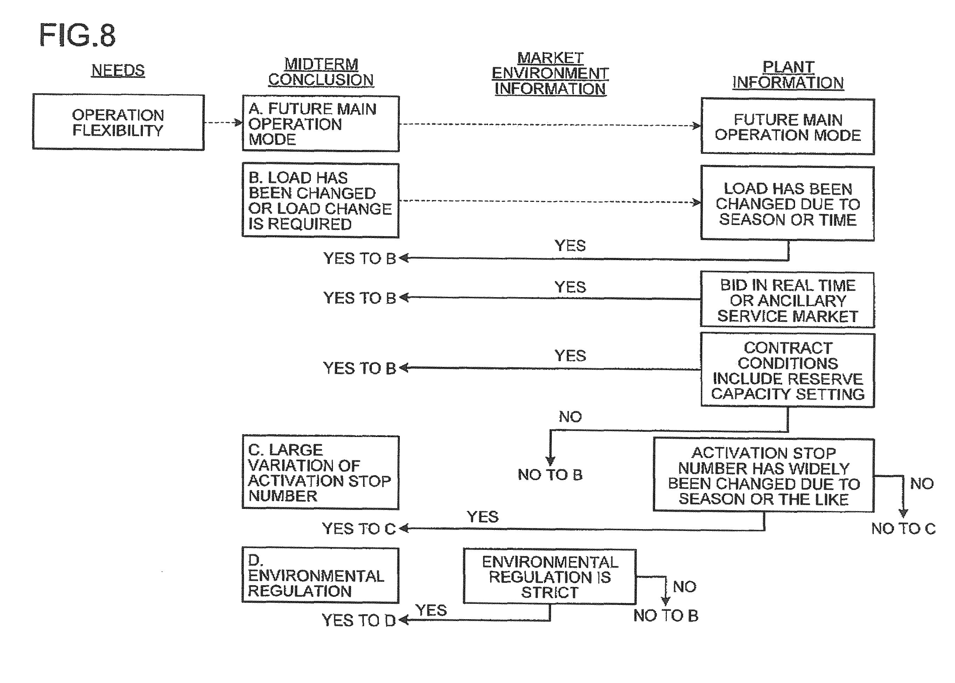

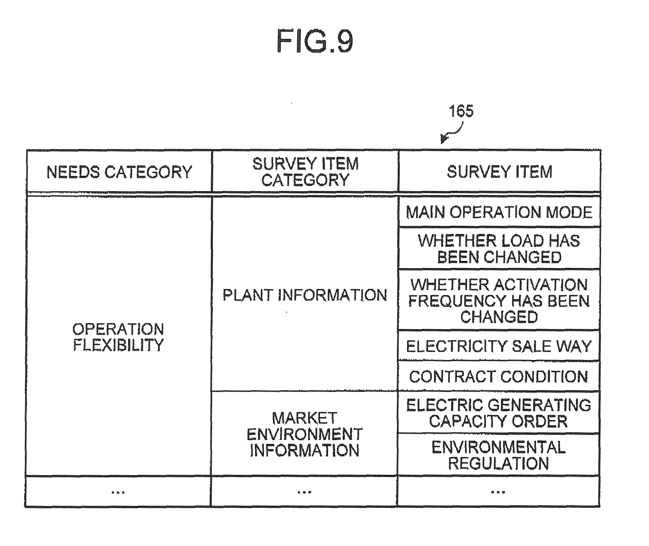

The correlation data 165 will be described in more detail with reference to FIGS. 7 to 9. FIGS. 7 and 8 are diagrams of examples of the correlation between a survey item and the need. FIG. 9 is a diagram of an example of the correlation data 165.

FIGS. 7 and 8 are diagrams of the correlations between the survey items and the needs included in the category of the "operation flexibility". For example, (A) when the main operation mode is set in an operation mode other than the "Baseload", or when it is expected that the operation mode will be shifted from the "Baseload" to the other mode, the following are assumed. Operation at part load or activation stop increases currently or in the future because of the deficient demand of electricity, the deficiency in fuel supply, the expensiveness of the fuel cost, or the position of the plant (the plant bids in the real-time or ancillary service market, or there is a restriction on the contract conditions). Thus, the concern about the variation width or speed of the load, or the speed of activation increases.

For example, (B and C) when the load change or the increase in the number of activations occurs to some extent although the main operation mode is basically in the "Baseload", the following are assumed. A certain amount of load following ability is required because of the large variation of the electricity demand per year or day, or in order to fit the curve of the electricity demand or the variation of the renewal energy because of the high rate of the renewal energy. Alternatively, importance is placed on the load following when a reserve capacity is set because the excess output is expected to come into service quickly when it is needed. Alternatively, a rapid activation or the like is required when the seasonal decrease in demand or fuel supply deficiency changes the main operation mode to the "Cyclic" or the "Peak".

For example, (D) when the load often decreases and the environmental regulation (the restriction on NOx and CO) is strict, the load deeply decreases. Thus, the turndown is required when the emission limitation is desired.

The survey items can be linked to each of the categories of the needs and the correlation data 165 is set based on the expertise necessary to operate the plant as described above.

The example of the correlation data 165 illustrated in FIG. 9 shows that the "main operation mode", the "whether the load has been changed", the "whether the activation frequency has been changed", the "electricity sale way", and the "contract condition" among the survey items included in the category of the "plant information" are linked to the category of the needs of the "operation flexibility". The example of the correlation data 165 illustrated in FIG. 9 further shows that the "electric generating capacity order", and the "environmental regulation" among the survey items included in the category of the "market environment information" are linked to the category of the needs of the "operation flexibility".

As described above, previously setting which survey items in which category are linked to the category of a need reduces the processing load for the need determination and improves the accuracy of the determination.

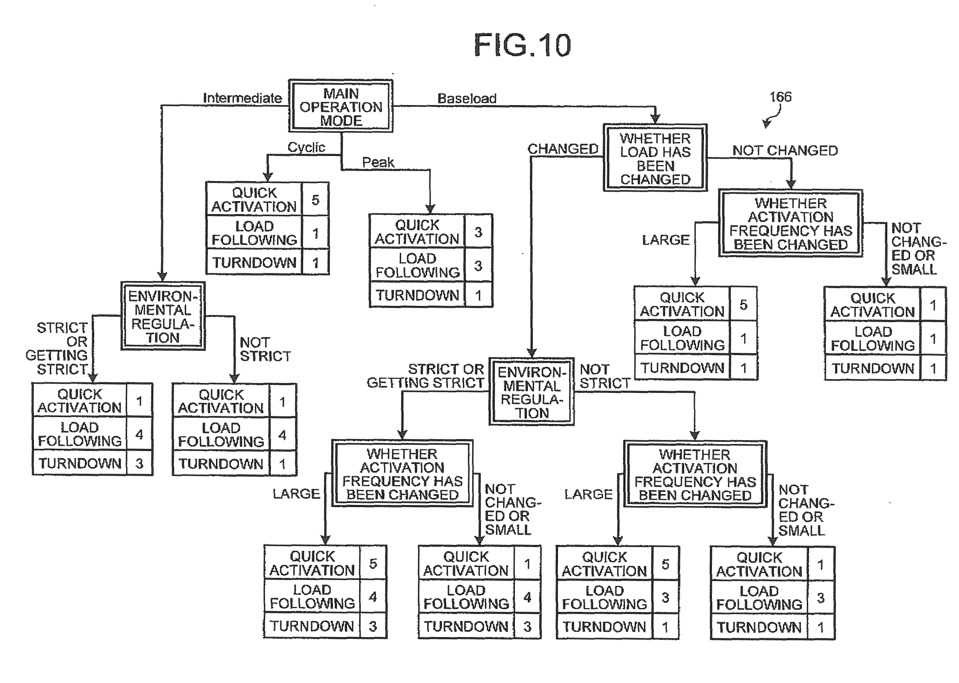

The generation of a determination logic with the logic generation unit 161a will be described in more detail with reference to FIG. 10. FIG. 10 is a diagram of an example of the logical data 166 storing the determination logic generated with the logic generation unit 161a.

The logic generation unit 161a generates a determination logic based on a statistical method using the information stored in the survey data 163 as an explanatory variable and using the information stored in the need assessment data 164 as a response variable. The logic generation unit 161a generates a determination logic while narrowing the relationship between the need and the survey item with reference to the correlation data 165.

The assessment of the survey item and need sometimes changes depending on the season and place. For example, the environmental regulation differs depending on the season, country, and area. Thus, the logic generation unit 161a receives the designation of the conditions for the time to determine the needs and the place in which the object of which needs are to be determined exists. Then, the logic generation unit 161a obtains only the information satisfying the designated conditions from the survey data 163 and the need assessment data 164 to use the information for generating a determination logic.

As described above, selecting the information used for generating a determination logic based on the designation of the time and place can improve the accuracy of the assessment of the needs based on the determination logic.

The determination logic generated with the logic generation unit 161a is stored in the logical data 166. FIG. 10 illustrates an example of the determination logic for determining the needs included in the category of "operation flexibility" among the determination logics stored in the logical data 166. The determination logic illustrated in FIG. 10 has been generated using a decision tree. The determination logic illustrated in FIG. 10 shows that the need of the "quick activation" is five, the need of the "load following" is four, and the need of the "turndown" is three, for example, when the "main operation mode" has the value "Baseload", the "whether the load has been changed" has the value "changed", the "environmental regulation" has the value "strict" or "getting strict", and the "whether the activation frequency has been changed" has the value "large".

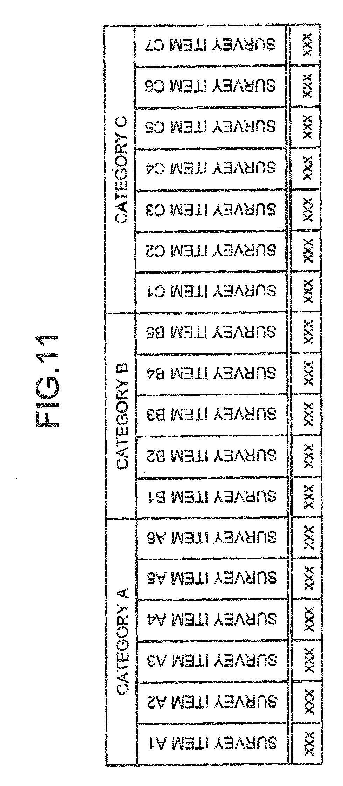

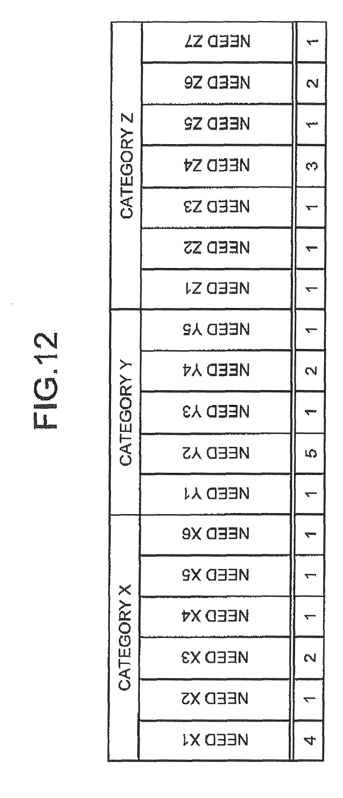

The process for determining a need with the determination unit 161b will be described in more detail with reference to FIGS. 11 and 12. FIG. 11 is a diagram of an example of the input data of the determination process. FIG. 12 is a diagram of an example of the output data of the determination process.

The determination unit 161b applies the input data as illustrated in FIG. 11 to the determination logic stored in the logical data 166 in order to output output data as illustrated in FIG. 12. The output data can be displayed on the display unit 11, can be stored in the storage unit 16, or can be transmitted to another device with the communication unit 13.

As illustrated in FIG. 11, the values obtained by quantitatively or qualitatively assessing the survey items of the object of which needs are to be determined are set in the input data. The input data includes at least all of the survey items used in the determination logic. In other words, the input data does not have to include the survey items that are included in the survey data 163 and are not included in the determination logic.

As illustrated in FIG. 12, the assessment result of each need is set in the output data. The assessment result is set in the five levels from one to five.

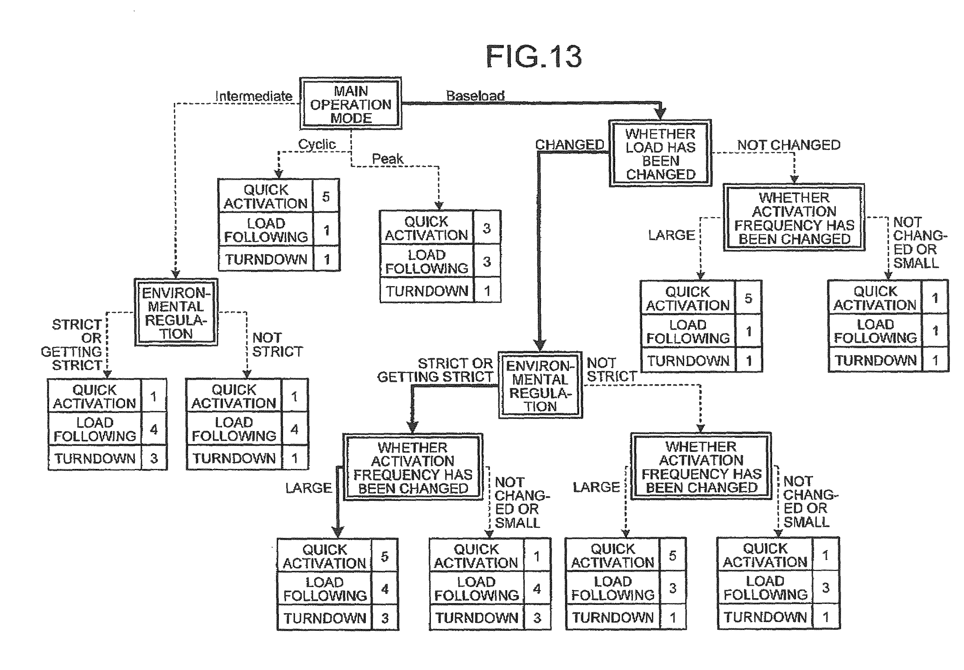

The production of the grounds for the determination of the needs with the grounds production unit 161c will be described in more detail with reference to FIG. 13. FIG. 13 is a diagram of an example of the production of the grounds for the determination of the needs.

The user operation for requesting the grounds for the determination of the needs included in the category of the "operation flexibility" causes the grounds production unit 161c to produce an image, for example, illustrated in FIG. 13 to the user. The image illustrated in FIG. 13 shows the pathway through which the determination unit 161b has passed in the determination logic illustrated in FIG. 11 to determine the needs.

Producing, to the user, which value of survey items has been used to determine the need can convince the user more deeply. Further, providing feedback showing which survey item is important to the user leads to the improvement in the quality of the survey data 163.

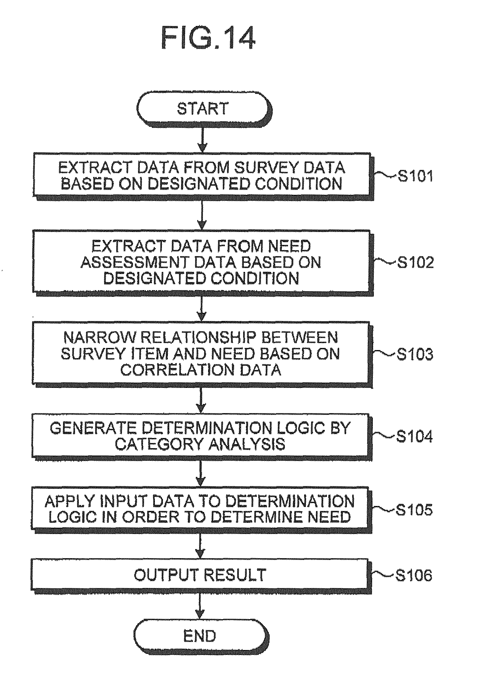

The procedures of a process in the need determination device 10 will be described with reference to FIG. 14. FIG. 14 is a flowchart describing the procedures of a process in the need determination device 10. The procedures of a process illustrated in FIG. 14 is implemented, by the control unit 15 executing the need determination program 161. Before the implementation of the process illustrated in FIG. 14, the information necessary to determine the needs is stored in the plant data 162, the survey data 163, the need assessment data 164, and the correlation data 165.

In step S101, the control unit 15 in the need determination device 10 extracts data from the survey data 163 based on the designated condition. In step S102, the control unit 15 extracts data from the need assessment data 164 based on the designated condition. In step S103, the control unit 15 narrows the relationship between the survey item and the need based on the correlation data 165.

In step S104, the control unit 15 generates the determination logic in categorical data analysis. The generated determination logic is stored in the logical data 166. In step S105, the control unit 15 determines the need with applying the input data about the determination object to the determination logic. Then, the control unit 15 outputs the determination result in step S106.

As described above, the need determination device 10 assesses a need based on the value of a quantitatively or qualitatively assessable survey item. This decreases the dispersion of the need determination result without depending on the determiner's experiences or skill. Further, the need determination device 10 assesses a need using not only the information about the object of which needs are to be assessed but also more general information. This can determine the needs on a long-term basis and from a wide view. As a result, the need determination device 10 can make a proposal with a high customer satisfaction.

Note that the aspect of the present invention described in the embodiment can arbitrarily be changed without departing from the gist of the present invention. For example, the program described in the embodiment can be divided into a plurality of modules or can be integrated with another program. Further, the functions of the need determination device 10 can appropriately be distributed.

The example in which the need determination device 10 is used for determining the needs of a thermal electricity generating plant has been described in the embodiment. However, the object of which needs are to be determined using the need determination device 10 is not limited to the thermal electricity generating plant. For example, a plant, a facility, equipment, or a device other than the thermal electricity generating plant can be the object of which needs are to be determined using the need determination device 10. A company or a person can also be the object of which needs are to be determined using the need determination device 10.

The example in which a determination logic is generated every time when a need is determined has been described in the embodiment. However, the operation of the determination logic is not limited to the embodiment. The need determination device 10 can reuse the determination logic stored in the logical data 166. In other words, the need determination device 10 links the generated determination logic to the designated condition and stores them in the logical data 166 in such a way as to use the existing determination logic corresponding to the designated condition without performing the procedures in step S101 to step S104 in FIG. 14 in order to perform the procedures in and after step S105.

## Claims

1. A need determination device (10) comprising:
a storage unit (16) configured to store survey data (163) in which an assessment value of a quantitatively or qualitatively assessable survey item is set at each textbook that is the same type as an object of which needs are to be determined, and need assessment data (164) in which an assessment value of a need is set at each textbook;
a determination logic generation unit (161a) configured to generate a determination logic for determining a need based on the survey data (163) and the need assessment data (164); and
a determination unit (161b) configured to determine a need of the object by applying, to the determination logic, input data in which the assessment value of the survey item of the object of which needs are to be determined is set.

2. The need determination device (10) according to claim 1, further comprising: a grounds production unit (161c) configured to produce how the needs of the object have been determined based on the determination logic.

3. The need determination device (10) according to claim 1 or 2, wherein
the survey data (163) includes a plurality of the survey items,
the need assessment data (164) includes a plurality of the needs,
the storage unit (16) further stores correlation data in which a correlation between the survey items included in the survey data (163) and the needs included in the need assessment data (164), and
the determination logic generation unit (161a) narrows a relationship between the survey items included in the survey data (163) and the needs included in the need assessment data (164) based on the correlation data in order to generate the determination logic.

4. The need determination device (10) according to any of claims 1 to 3, wherein the survey data (163) includes a survey item of a system of a society to which the textbook belongs in addition to a survey item of the textbook itself.

5. The need determination device (10) according to any of claims 1 to 4, wherein the determination logic generation unit (161a) generates the determination logic in categorical data analysis.

6. A need determination method performed with a need determination device (10), the need determination method comprising:
obtaining survey data (163) in which an assessment value of a quantitatively or qualitatively assessable survey item is set at each textbook that is the same type as an object of which needs are to be determined, and need assessment data (164) in which an assessment value of a need is set at each of the textbooks;
generating a determination logic for determining a need based on the survey data (163) and the need assessment data (164); and
determining a need of the object by applying, to the determination logic, input data in which the assessment value of the survey item of the object of which needs are to be determined is set.

7. A need determination program causing a need determination device.(10) to perform:
obtaining survey data (163) in which an assessment value of a quantitatively or qualitatively assessable survey item is set at each textbook that is the same type as an object of which needs are to be determined, and need assessment data (164) in which an assessment value of a need is set at each of the textbooks;
generating a determination logic for determining a need based on the survey data (163) and the need assessment data (164); and
determining a need of the object by applying, to the determination logic, input data in which the assessment value of the survey item of the object of which needs are to be determined is set.
